# EUROPÄISCHE PATENTANMELDUNG

(11) **EP 0 997 665 A1**
(43) Veröffentlichungstag der Anmeldung: **03.05.2000**
(21) Anmeldenummer: 99120375.3
(22) Anmeldetag: 13.10.1999
(51) Int. Cl.: F16H 25/20, E05F 15/12, B60J 1/14, F16C 11/06

(54) **Antriebsvorrichtung für ein bewegbares Teil, insbesondere ein Seitenausstellfenster eines Fahrzeuges**

(30) Priorität: 26.10.1998 DE 19849246
(71) Anmelder: Mannesmann VDO Aktiengesellschaft, 60388 Frankfurt am Main (DE)
(72) Erfinder: Pfanzer, Gerhard, 65520 Bad Camberg (DE)
(74) Vertreter: Klein, Thomas, Dipl.-Ing.

(57) **Zusammenfassung**

Die Erfindung betrifft eine Antriebsvorrichtung für ein bewegbares Teil, insbesondere ein Seitenausstellfenster eines Fahrzeuges, mit einem Stellantrieb, der über wenigstens ein Verbindungselement (11) und ein Kugelgelenk (12) mit dem bewegbaren Teil verbunden ist, wobei zur Verminderung von geräuscherzeugenden Schwingungen erfindungsgemäß vorgesehen ist, daß ein in einer Kugelpfanne des Kugelgelenkes gelagerter Kugelkopf (12) oder die Kugelpfanne mit elastisch nachgiebigen Mitteln (13) versehen ist.

## Beschreibung

Die Erfindung betrifft eine Antriebsvorrichtung für ein bewegbares Teil, insbesondere ein Seitenausstellfenster eines Fahrzeuges, mit einem Stellantrieb, der über Verbindungselemente mit dem bewegbaren Teil verbunden ist, gemäß den Merkmalen des Oberbegriffes des Patentanspruches 1.

Aus dem amerikanischen Patent US 4,186,524 ist eine Antriebsvorrichtung für ein Seitenausstellfenster eines Fahrzeuges bekannt. Dieses Seitenausstellfenster ist gelenkig an einem Chassis (zum Beispiel der B-Säule) des Fahrzeuges angeordnet und kann von einem Stellantrieb aus seiner Schließstellung in die Offenstellung und wieder zurück beziehungsweise in Zwischenstellungen gebracht werden.

Der Stellantrieb ist als Elektromotor ausgebildet, der über Zahnräder auf eine Gewindestange wirkt, wobei die Gewindestange mit einem Bowdenzug verbunden ist. Durch Drehung der Gewindestange wird der Bowdenzug linear bewegt und bewirkt somit, daß das Seitenausstellfenster geöffnet oder geschlossen wird.

Diese Anordnung hat den Nachteil, daß sie aufwendig ist, da der Stellantrieb in einem Bereich angeordnet werden muß, der weit entfernt ist von der Stelle, an der das Verbindungselement an dem Seitenausstellfenster angreift. Daraus resultiert ein hoher Montageaufwand.

Nun könnte man daran denken, den Stellantrieb direkt in den Bereich zu verlagern, in den das Verbindungselement an dem Seitenausstellfenster befestigt ist. Aber auch hierbei tritt, genauso wie bei der Ausgestaltung gemäß der US 4,186,524, das Problem auf, daß es bei Antriebsvorrichtungen, die mit einer Serienproduktion hergestellt und somit toleranzbehaftet sind, zu Geräuschentwicklungen, insbesondere bei geöffnetem Seitenausstellfenster kommt, da das Verbindungselement über ein Kugelgelenk mit dem Seitenausstellfenster befestigt ist, um eine bogenförmige Bewegungsbahn des Endes das Verbindungselementes zu ermöglichen. Da ein solches Kugelgelenk und auch das Verbindungselement Toleranzen unterliegt, kommt es aufgrund von Windströmungen und Vibrationen des Fahrzeuges auch zu geräuscherzeugenden Schwingungen des Seitenausstellfensters, die auf die Antriebsvorrichtung übertragen werden, dort Geräusche erzeugen und für die Insassen des Fahrzeuges störend sind. Solche Geräusche sind ganz besonders deshalb störend, da sie in einem Bereich entstehen, wo sich der Kopf des Insassen befindet.

Der Erfindung liegt daher die Aufgabe zugrunde, eine Antriebsvorrichtung für ein bewegbares Teil, insbesondere ein Seitenausstellfenster eines Fahrzeuges, derart zu verbessern, daß Schwingungen der beteiligten Bauteile weitestgehend unterbunden werden oder gänzlich ausgeschlossen werden.

Diese Aufgabe ist durch die Merkmale des Patentanspruches 1 gelöst.

Erfindungsgemäß ist vorgesehen, daß ein in einer Kugelpfanne des Kugelgelenkes gelagerten Kugelkopf oder die Kugelpfanne mit elastisch nachgiebigen Mitteln versehen ist. In der Regel besteht das Kugelgelenk aus Kunststoff, welches zum Beispiel im Spritzgußverfahren hergestellt wird. Dabei kommt es zu Toleranzen, so daß sich der in der Kugelpfanne gelagerte Kugelkopf mit einem gewissen Spiel noch relativ zu der Kugelpfanne aufgrund dieser Toleranzen bewegen kann. Diese Toleranzen werden in erfindungsgemäßer Weise mit den elastisch nachgiebigen Mitteln beseitigt, so daß sich zwar der Kugelkopf in der Kugelpfanne noch bewegen kann (gegebenenfalls etwas schwergängig), aber ein Formschluß entstanden ist, so daß kein Raum mehr für Schwingungen zur Verfügung steht. Damit ist die Entstehungsquelle für die geschilderten störenden Schwingungen und damit für die daraus resultierende Geräuschentwicklung beseitigt. Auch können diese Schwingungen nicht mehr in Richtung des Stellantriebes oder des Seitenausstellfensters übertragen werden, so daß die hier beteiligten Bauteile ebenfalls nicht zum Schwingen angeregt werden und die Übertragung von Körperschall (ausgelöst durch den Stellantrieb im Betrieb) unterbunden wird, wodurch sich der Geräuschpegel weiter vermindert beziehungsweise gar keine Geräusche mehr erzeugt werden und der Verschleiß deutlich reduziert wird.

In Weiterbildung der Erfindung weist der Kugelkopf wenigstens eine umlaufende Nut auf, die einen Gummiring aufnimmt. Damit kann in einfacher Art und Weise ein solcher Kugelkopf hergestellt werden, wobei die umlaufende Nut entweder schon beim Herstellungsprozeß eingebracht ist oder nach Herstellung des Kugelkopfes eingebracht wird. Bei dem Gummiring handelt es sich zum Beispiel um einen sogenannten O-Ring, der kostengünstig und in einer Vielzahl von unterschiedlichen Maßen (Durchmessern und Dicken) zur Verfügung steht. Somit kann die erfindungsgemäße Antriebsvorrichtung auch kostengünstig hergestellt werden.

In Weiterbildung der Erfindung weist der Kugelkopf zwei parallele, aus der Mitte heraus angeordnete Nuten auf, in denen jeweils ein Gummiring eingelegt ist. Da somit zwei umlaufende Flächen zur Verfügung stehen, mit denen die Oberfläche der Gummiring an der Innenfläche der Kugelpfanne anliegen kann, ist gewährleistet, daß bei jeder Bewegung immer mindestens eine Oberfläche eines Gummiringes an der Innenfläche der Kugelpfanne anliegt und somit die störenden Geräusche wirksam vermieden werden. Dies ist insbesondere dann erforderlich, wenn das Kugelgelenk auf seiner Bewegungsbahn eine bogenförmige Bewegung ausführt. Ein zwischen den Nuten sich ergebender Steg dient der Kraftübertragung bei Zug- sowie Druckbewegungen. Der Kugelkopf kann auch aus zwei entsprechend mit einer Nut versehenen Kugelkopfhälften bestehen. Werden die Gummiringe bei Zug- sowie Druckbewegungen zusammengedrückt, dienen die Oberflächen der Kugelkopfhälften der Kraftübertragung, die formschlüssig an der Kugelpfanne zur Anlage kommen.

In Weiterbildung der Erfindung ist der Kugelkopf zumindest teilweise mit einer elastisch nachgiebigen Schicht überzogen. Eine solche elastisch nachgiebige Schicht kann zum Beispiel nach seiner Herstellung über den Kugelkopf aufgezogen werden, wobei es auch denkbar ist, den Kugelkopf durch Eintauchen in eine entsprechende Flüssigkeit mit einer solchen Schicht, die anschließend in einen festen Zustand übergeht, zu überziehen. Auch mit einer solchen Schicht ist gewährleistet, daß die Toleranz zwischen der Kugelpfanne und dem Kugelkopf des Kugelgelenkes beseitigt ist.

Der gleiche Effekt stellt sich ein, wenn auch oder nur die Kugelpfanne auf ihrer Innenseite zumindest teilweise mit einer elastisch nachgiebigen Schicht überzogen ist. Es sei noch erwähnt, daß es auch denkbar ist, daß die Innenseite der Kugelpfanne mit wenigstens einer umlaufenden Nut versehen wird, in die jeweils ein Gummiring eingelegt wird, wobei es sich jedoch anbietet, diese Maßnahmen nur bei dem Kugelkopf vorzunehmen, da sich hier der Herstellungs- und Montagevorgang einfacher gestattet.

In Weiterbildung der Erfindung ist das Kugelgelenk zwischen dem Verbindungselement und dem bewegbaren Teil angeordnet. Bei dem Verbindungselement handelt es sich beispielsweise um den schon bekannten Bowdenzug oder um eine Verbindungsstange oder gegebenenfalls eine Kombination der beiden genannten Elemente. Da das Seitenausstellfenster gelenkig an dem Chassis angeordnet und das Kugelgelenk in Entfernung von diesem Anlenkpunkt angeordnet ist, vollführt das Kugelgelenk bei der Bewegung des Seitenausstellfensters von der geschlossen in die geöffnete Stellung eine in etwa bogenförmige Bahn, die über das Kugelgelenk bei weitestgehend linearen Bewegung des Verbindungselementes ermöglicht wird. Das heißt, daß das Ende des Verbindungselementes (der Verbindungsstange) eine lineare Bewegungsbahn beschreibt, die über das Kugelgelenk in eine bogenförmige Bewegungsbahn umgesetzt wird.

Der gleiche Effekt stellt sich ein, wenn das Kugelgelenk zwischen dem Verbindungselement und dem Stellantrieb angeordnet ist. Je nach Länge der zu beschreibenden Bewegungsbahn ist es von Vorteil, wenn an beiden Enden des Verbindungselementes (der Verbindungsstange) ein Kugelgelenk angeordnet ist. Damit läßt sich jede gewünschte Bewegungsbahn und jede Länge der gewünschten Bewegungsbahn problemlos realisieren. Es versteht sich von selbst, daß die beiden Kugelgelenke am jeweiligen Ende des Verbindungselementes mit den elastisch nachgiebigen Mitteln wie oben beschrieben versehen sind.

Weiterhin ist als zusätzliche Maßnahme zur Reduzierung von unerwünschten Geräuschen vorgesehen, daß einzelne Gewindegänge zumindest eines Gewindestückes einer Antriebswelle der Antriebsvorrichtung derartig ausgebildet sind, daß sie in den jeweils zugehörigen Gewindegängen des anderen Gewindestückes unter Krafteinwirkung anliegen. Die einzelnen Gewindestücke sind in der Regel im Spritzgußverfahren aus Kunststoff hergestellt, wobei dieses Verfahren gewissen Toleranzen unterliegt. Die Erfindung macht sich jetzt die Tatsache zunutze, daß einzelne Gewindegänge eines Gewindestückes zum Beispiel dicker ausgebildet sind als die übrigen Gewindegänge, während die Gewindegänge des anderen Gewindestückes eine einheitliche Form und einheitliche Maße aufweisen. Dadurch wird erreicht, daß die dicker ausgebildeten einzelnen Gewindegänge unter Krafteinwirkung in den jeweils zugehörigen Gewindegängen des anderen Gewindestückes anliegen, so daß damit die bei der Herstellung anfallenden Toleranzen ausgeglichen sind und eine noch zulässige Schwergängigkeit, die von dem Stellantrieb problemlos überwunden werden kann, in Kauf genommen wird, um damit die Schwingungsneigung wirksam zu unterbinden. In vorteilhafterweise werden nicht sämtliche Gewindegänge eines Gewindestückes zum Beispiel dicker ausgebildet, da damit eine unzulässige und auch unnötige Schwergängikeit erzielt würde. Deshalb reicht es aus, daß nur vereinzelte Gewindegänge (wie zum Beispiel jeder zweite, oder jeder fünfte oder so weiter) Gewindegang anders als die übrigen Gewindegänge ausgebildet sein kann.

In Weiterbildung der Erfindung sind einzelne Gewindegänge gegenüber den übrigen Gewindegängen in Umfangsrichtung gebogen ausgebildet. Hierbei kann es sich um einen einfachen Bogen handeln, aber auch um einen extrem langgestreckten S - Bogen, so daß die Flanken der einzelnen Gewindegänge teilweise an den Gewindegängen des zugehörigen Gewindestückes unter Krafteinwirkung zum Anliegen kommen. Auch damit wird wieder die erforderliche, geringe Schwergängigkeit erreicht, um Toleranzen ausgleichen zu können.

In Weiterbildung der Erfindung weisen einzelne Gewindegänge zumindest teilweise in Umfangsrichtung einen Schlitz auf. Diese einzelnen Gewindegänge sind dann wieder gegenüber den übrigen Gewindegängen dicker ausgebildet, wobei durch den Schlitz eine gewisse Nachgiebigkeit erzielt wird, da die durch den Schlitz voneinander getrennten Flanken eines Gewindeganges gegen den Gewindegang des zugehörigen Gewindestückes drücken.

In einer weiteren Ausgestaltung der Erfindung sind einzelne Gewindegänge aus einer von der durch das zugehörige Gewindestück vorgegebenen Lage abweichenden Lage angeordnet. Diese Versetzung aus der Sollage in Umfangsrichtung heraus bewirkt ebenfalls, daß eine Flanke eines Gewindeganges gegen die Flanke des Gewindeganges des zugehörigen Gewindestückes drückt, so daß auch hier wieder der Effekt erzielt wird, daß Toleranzen ausgeglichen werden.

Es versteht sich von selbst, daß bei einem Gewindestücke die beschriebenen Maßnahmen einzeln oder in Kombination voneinander ergriffen werden können.

In besonders vorteilhafterweise findet eine Maßnahme oder eine Kombination von Maßnahmen bei einem Gewindestück Anwendung, daß als Außengewinde ausgebildet ist, da ein Außengewinde durch eine Form von zwei zusammengesetzten und wieder trennbaren Formen im Spritzgußverfahren hergestellt wird, während ein Innengewinde mit einer ein Außengewinde aufweisenden Form hergestellt wird, wobei dieser Kern in der Form mit Innengewinde nachdem Herstellungsprozeß herausgedreht wird. Wird jedoch auch das Gewindestück mit dem Innengewinde aus zwei und mehreren Formhälften, die nach der Herstellung getrennt werden können, hergestellt, finden die beschriebenen Maßnahmen auch bei diesem Gewindestück Anwendung.

Die erfindungsgemäße Antriebsvorrichtung ist im folgenden anhand eines Ausführungsbeispieles beschrieben und anhand der Figuren erläutert, wobei der Erfindungsgedanke nicht auf dieses Ausführungsbeispiel beschränkt ist.

Es zeigen:
- Figur 1:: einen Ausstellfensterantrieb,
- Figur 2:: Detailansichten einer Antriebswelle,
- Figuren 3 und 4:: verschiedene Zahnformen,
- Figur 5:: ein Ende eines Antriebsrohres mit montierter Verbindungsstange und ohne Abdeckung,
- Figur 6:: eine Detailansicht eines Kugelgelenkes,
- Figur 7:: ein Ende eines Antriebsrohres mit montierter Verbindungsstange und Abdeckung.

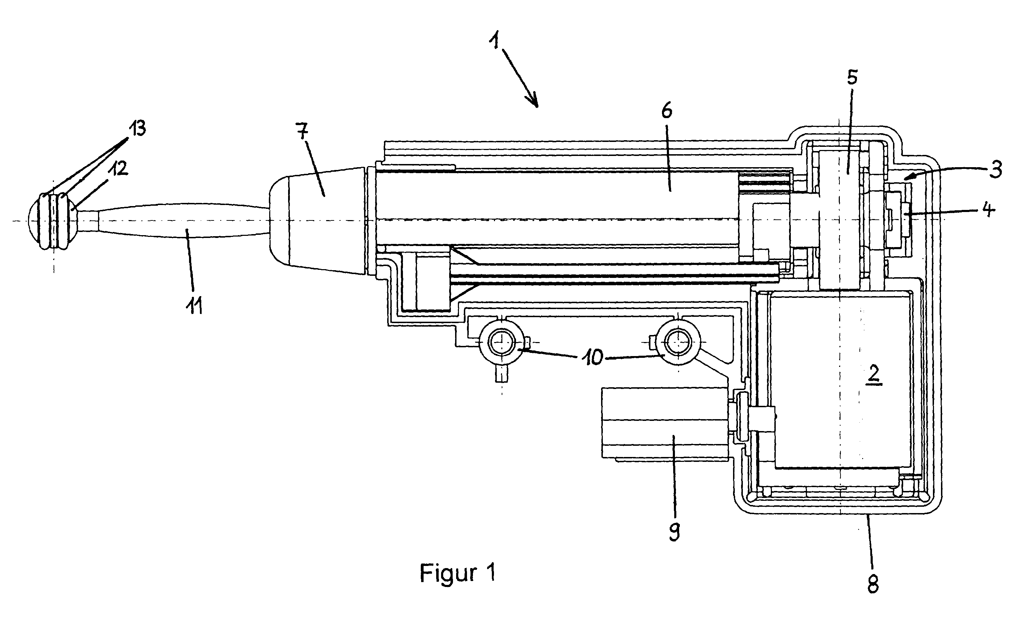

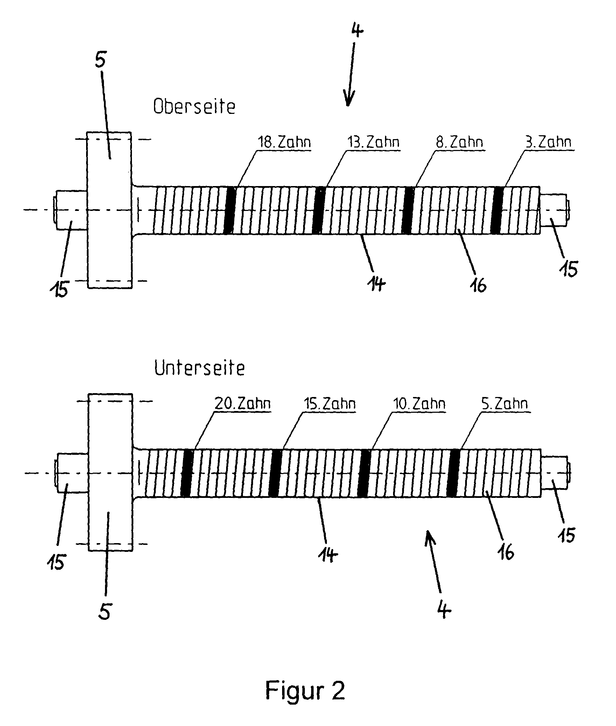

Figur 1 zeigt einen Ausstellfensterantrieb 1, der als sogenannter Linearantrieb ausgebildet ist. Der Ausstellfensterantrieb 1 weist als Stellantrieb einen Elektromotor 2 auf, der über ein Untersetzungsgetriebe 3 eine Antriebswelle 4 antreibt. Diese Antriebswelle 4 weist ein Zahnrad 5 mit einer Außenverzahnung auf, wobei das Zahnrad 5 von einem auf der Motorwelle des Elektromotors 2 angeordneten, nicht gezeigten Schneckenrad angetrieben wird. Die Antriebswelle 4, die ein Außengewinde (siehe auch Figur 2) aufweist, erstreckt sich längs innerhalb eines Antriebsrohres 6, wobei das Antriebsrohr 6 mit einem dem Außengewinde der Antriebswelle 4 entsprechenden Innengewinde versehen ist. Lagerungen für die Antriebswelle 4 und das Antriebsrohr 6 sind zwar vorhanden, der besseren Übersicht wegen jedoch nicht gezeigt.

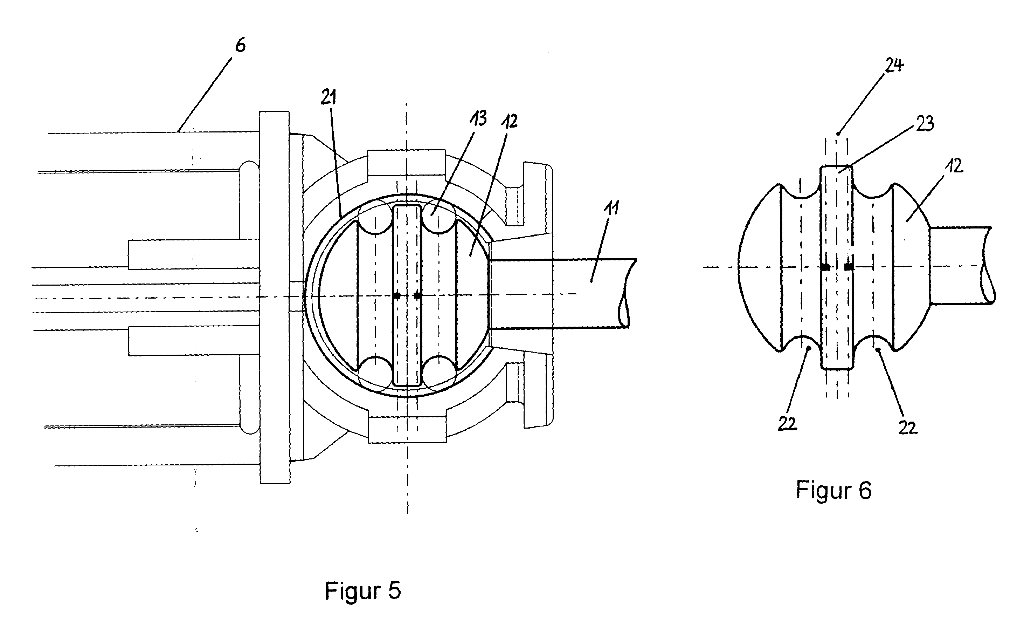

Das dem Zahnrad 5 abgewandte Ende des Antriebsrohres 6 mündet in eine Abdeckung 7, die fest mit dem Antriebsrohr 6 verbunden ist oder mit diesem verbunden werden kann. Auf die Ausgestaltung dieses Endes des Antriebsrohres 6 wird in Figur 5 noch eingegangen.

Der Ausstellfensterantrieb 1 weist weiterhin ein Gehäuse 8 auf, in dem die Antriebselemente untergebracht sind. Das Gehäuse 8 kann zwecks Geräuschreduzierung mit einer Dämmschicht, insbesondere innen, versehen werden. An dem Gehäuse 8 oder mit diesem einstückig hergestellt befindet sich ein Stecker 9, über den der Elektromotor 2 angesteuert wird. Gegebenenfalls werden auch Stellungssignale über diesen Stecker 9 übertragen. Ebenso sind Befestigungsmittel 10 vorhanden, mit denen der Ausstellfensterantrieb 1 an einem Teil des Fahrzeuges befestigt werden kann. Die Anordnung und Ausbildung der Befestigungsmittel 10 richtet sich nach dem Einbauraum des Ausstellfensterantriebes 1, der somit als Modul leicht eingebaut und über den Stecker 9 in Betrieb genommen werden kann.

Aus der Abdeckung 7 heraus ragt eine Verbindungsstange 11, wobei das der Abdeckung 7 abgewandte Ende der Verbindungsstange 11 einen Kugelkopf 12 aufweist. Die Verbindungsstange 11 und der Kugelkopf 12 sind in vorteilhafterweise als einstückiges Drehteil (zum Beispiel Aluminium) oder Kunststoffteil hergestellt, können aber auch zwei Bauteile bilden, wozu dann der Kugelkopf 12 mit der Verbindungsstange 11 verbunden (zum Beispiel durch Verkleben oder Aufklipsen) wird. In vorteilhafter Weise ist auch das andere Ende der Verbindungsstange 11 mit einem Kugelkopf innerhalb der Abdeckung 7 verbunden.

Der in Figur 1 gezeigte Kugelkopf 12 weist zwei aus der Mitte heraus angeordnete Gummiringe 13 auf die in Nuten eingelegt sind.

Figur 2 zeigt Detailansichten der Antriebswelle 4. Diese weist ein sich längserstreckendes Gewindestück 14 auf, das als Außengewinde ausgebildet ist. An den Enden der Antriebswelle 4 sind Lagerenden 15 vorhanden, mit denen die Antriebswelle 4 zum Beispiel in dem Gehäuse 8 oder in dem Antriebsrohr 6 gelagert ist. Das Gewindestück 14 weist Zähne 16 auf, die das Außengewinde bilden. Durch die ausgefüllten Gewindegänge des (beispielsweise) dritten, des achten, des dreizehnten und des achtzehnten Zahns ist angedeutet, daß diese Zähne auf der Oberseite, das heißt also um den halben Umfang des Gewindestückes 14, dicker ausgebildet sind als die übrigen Zähne 16. Genauso verhält es sich auf der Unterseite der Antriebswelle 4 mit dem fünften, dem zehnten, dem fünfzehnten und dem zwanzigsten Zahn, die ebenfalls über die Hälfte des Gesamtumfanges des Gewindestückes 14 dicker ausgebildet sind, wobei die dicker ausgebildeten Zähne auf der Oberseite etwa mittig (in Längsrichtung betrachet) zwischen den dicker ausgebildeten Zähnen auf der Unterseite beziehungsweise umgekehrt angeordnet sind.

Durch diese im wesentlichen symmetrische Anordnung wird bei einer Drehung der Antriebswelle 4 erreicht, daß diese sich etwas schwergängig in dem Antriebsrohr 6 bewegt und immer ein Kraftschluß zwischen der Antriebswelle 4 und dem Antriebsrohr 6 gegeben ist, so daß keine Längsbewegung des Antriebsrohres 6 beziehungsweise der Antriebswelle 4 in Längsrichtung aufgrund von Toleranzen möglich ist. Die Verdickung ist so gewählt, daß eine gerade erforderliche Schwergängigkeit erzielt wird, die von dem Elektromotor 2 problemlos übersteuert werden kann, die jedoch nicht so groß ist, daß die einzelnen Zähne einem unnötigen Verschleiß unterliegen würden. Deshalb ist es an der Stelle denkbar, daß speziell für Kunststoff geeignete Schmiermittel zwischen die Gewindegänge gegeben werden.

Zusätzlich zu der besonderen Ausgestaltung der Antriebswelle 4 kann auch die Oberfläche des Antriebsrohres 6 mit elastisch nachgiebigen Mitteln (zum Beispiel ein Filz, der aufgeklebt wird) versehen werden, um Toleranzen zwischen dem Antriebsrohr 6 und dem Gehäuse 8 bei einer Längsbewegung des Antriebsrohres 6 auszugleichen.

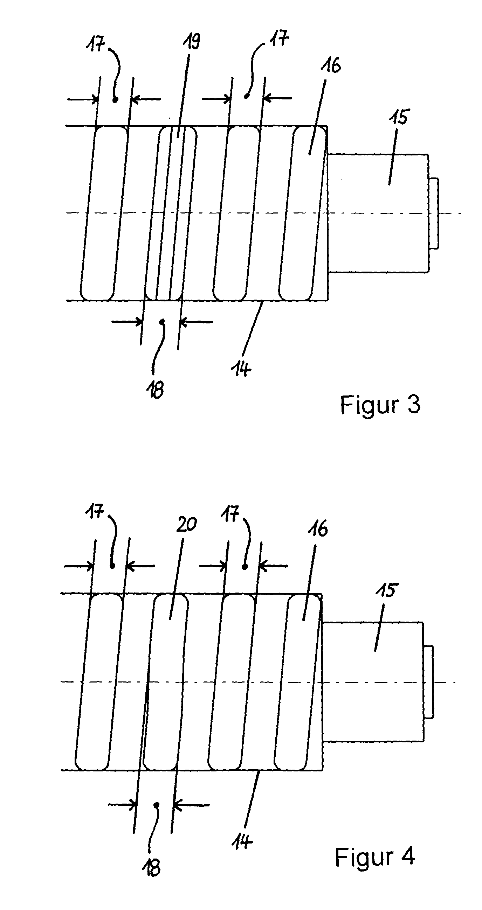

In Figur 3 ist gezeigt, daß die Zähne 16 eine Dicke (Breite) aufweisen, die mit der Bezugsziffer 17 versehen ist. Zumindest einer von den Zähnen, der dicker ausgebildet ist als die übrigen Zähne (diese Breite ist hier mit der Bezugsziffer 18 versehen), weist einen Schlitz 19 auf, wobei dieser Schlitz 19 im Zusammenspiel mit den Gewindegängen des Antriebsrohres 6 zusammengedrückt werden kann, so daß aufgrund dieser federartigen Wirkung Toleranzen ausgeglichen und Schwingungen vermieden werden.

In Figur 4 ist gezeigt, daß ein Zahn 20, insbesondere ein gegenüber den anderen Zähnen dickerer Zahn, asymmetrisch, insbesondere in Bogenform, ausgebildet ist. So kommen nur Teilflanken des asymmetrischen, insbesondere dickeren Zahnes mit den zugehörigen Gewindegängen des Antriebsrohres 6 in Berührung, wodurch auch eine Krafteinwirkung erzielt wird.

Figur 5 zeigt ein Ende des Antriebsrohres 6 mit montierter Verbindungsstange 11 und ohne aufgesetzte Abdeckung 7. Diese Abdeckung 7 stellt im wesentlichen eine Schutzabdeckung dar, um zu verhindern, daß das darunter angeordnete Kugelgelenk und auch die Innereien des Ausstellfensterantriebes 1 verschmutzt werden. Genauso ist eine Abdeckung des Kugelgelenkes, dessen Kugelkopf 12 in Figur 1 dargestellt ist, mit einer entsprechend ausgestalteten Abdeckung möglich. Das eine Ende des Antriebsrohres 6 weist nicht näher bezeichnete Vorsprünge auf, die nach Aufsetzen der Abdeckung 7 in deren entsprechende Vertiefungen eingreifen (oder umgekehrt: Vorsprünge an der Abdeckung 7 und entsprechende Vertiefungen an dem einen Ende des Antriebsrohres 6), so daß dadurch die Abdeckung 7 mittels Formschluß an dem einen Ende des Antriebsrohres 6 festgesetzt wird.

An diesem einen Ende des Antriebsrohres 6 ist für den Kugelkopf 12 eine Kugelpfanne 21 vorgesehen. Alternativ dazu kann auch ein Teil des Antriebsrohres 6 in Verbindung mit einem Teil der Abdeckung 7 oder die Abdeckung 7 alleine die Kugelpfanne 21 bilden, so daß nach dem Einlegen des Kugelkopfes 12 in den Teil der Kugelpfanne 21 des Antriebsrohres 6 die Abdeckung 7 übergestülpt wird und damit die Verbindungsstange 11 bewegbar festgelegt wird. Der gleiche Vorgang kann auf der anderen Seite der Verbindungsstange 11 erfolgen, wobei ein Teil der Kugelpfanne an dem nicht gezeigten Seitenausstellfenster befestigt ist und eine entsprechende Abdeckung über den Kugelkopf 12 der Figur 1 übergeschoben wird. Dies erfolgt vorzugsweise vor der ortsfesten Montage des Ausstellfensterantriebes 1, so daß das Antriebsrohr 6 in eine Stellung gebracht wird, die der Schließstellung des Seitenausstellfensters entspricht; anschließend wird der äußere Kugelkopf 12 mit der Kugelpfanne über die Abdeckung mit dem Seitenausstellfenster verbunden und dann erst wird das Gehäuse 8 des Ausstellfensterantriebes 1 mit den Befestigungsmitteln 10 an der Karosserie oder einem sonstigen Teil des Fahrzeuges befestigt. Nach Ansteuerung des Elektromotores 2 kann dann das Seitenausstellfenster von seiner geschlossenen Stellung in eine geöffnete Stellung oder eine Zwischenstellung gebracht werden, wobei insbesondere die vollständig geöffnete Stellung durch Blockbetrieb des Elektromotors 2 oder durch einen Endstellungsschalter, der vorzugsweise in dem Gehäuse 8 integriert ist, festgestellt und in Abhängigkeit dessen die Stromzufuhr zu dem Elektromotor 2 abgeschaltet wird.

Figur 6 zeigt einen Schnitt durch einen Kugelkopf 12, wobei erkennbar ist, wie zwei Nuten 22 hohlkehlenfömig und sich über den Umfang des Kugelkopfes 12 erstreckend zur Aufnahme der Gummiringe 13 aus der Mitte heraus angeordnet sind. Der Einsatz von zwei Nuten 22 und zwei entsprechend eingelegten Gummiringen 13 ist erforderlich, um zu gewährleisten, daß immer wenigstens eine Oberfläche eines Gummiringes 13 mit der hier nicht gezeigten, korrespondierenden Innenfläche der Kugelpfanne, die insbesondere Bestandteil der Abdeckung 7 ist, in Verbindung bleibt und durch den sich ein zwischen den beiden Nuten 14 einstellender Steg 23 eine Übertragung der Kräfte von der Verbindungsstange 11 auf die nicht gezeigte Kugelpfanne, die an dem Seitenausstellfenster befestigt ist, gegeben ist, da gerade bei einer Bewegung des Seitenausstellfensters von seiner offenen Stellung in seine geschlossene Stellung hohe Zugkräfte aufzubringen sind. Der Mittelpunkt des Kugelkopfes 12 (beziehungsweise der beiden Kugelkopfhälften) muß nicht im Schnittpunkt der in Figur 6 gezeigten waagerechten gestrichelten Linie und der Mittellinie 24 des Steges 23 liegen, sondern kann davon abweichen. So kann zum Beispiel (bei Betrachtung der Figur 6) der Mittelpunkt der linken Hälfte des Kugelkopfes 12 im rechten kleinen Quadrat und der Mittelpunkt der rechten Hälfte des Kugelkopfes 12 im linken kleinen Quadrat liegen. Alternativ dazu kann zum Beispiel (bei Betrachtung der Figur 6) der Mittelpunkt der linken Hälfte des Kugelkopfes 12 im linken kleinen Quadrat und der Mittelpunkt der rechten Hälfte des Kugelkopfes 12 im rechten kleinen Quadrat liegen.

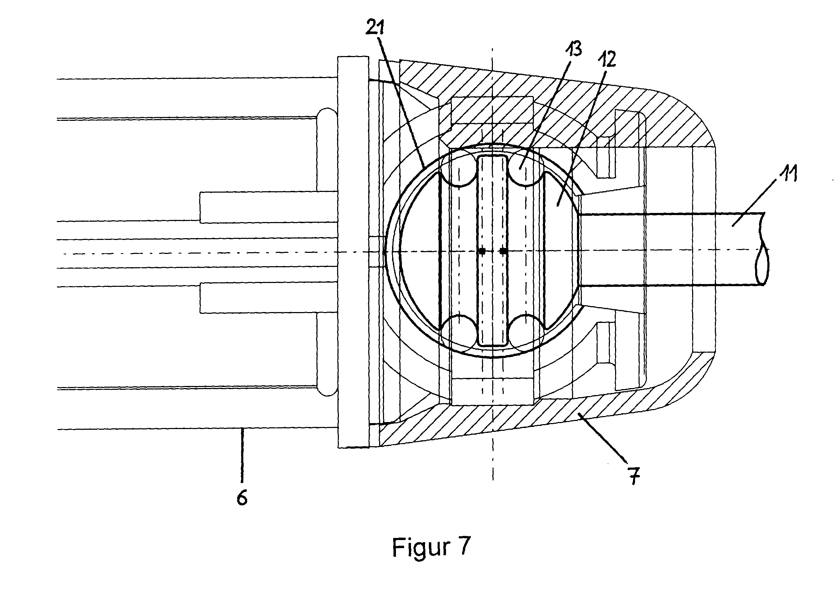

Figur 7 zeigt ein Ende des Antriebsrohres 6 mit montierter Verbindungsstange 11 und mit aufgesetzter Abdeckung 7.

### Bezugszeichenliste:

- 1.: Ausstellfensterantrieb
- 2.: Elektromotor
- 3.: Untersetzungsgetriebe
- 4.: Antriebswelle (mit Außengewinde)
- 5.: Zahnrad
- 6.: Antriebsrohr (mit Innengewinde)
- 7.: Abdeckung
- 8.: Gehäuse
- 9.: Stecker
- 10.: Befestigungsmittel
- 11.: Verbindungsstange
- 12.: Kugelkopf
- 13.: Gummiring
- 14.: Gewindestück
- 15.: Lagerende
- 16.: Zähne
- 17.: Breite
- 18.: größere Breite
- 19.: Schlitz
- 20.: ein Zahn
- 21.: Kugelpfanne
- 22.: Nuten
- 23.: Steg
- 24.: Mittellinie

## Patentansprüche

1. Antriebsvorrichtung für ein bewegbares Teil, insbesondere ein Seitenausstellfenster eines Fahrzeuges, mit einem Stellantrieb, der über wenigstens ein Verbindungselement und ein Kugelgelenk mit dem bewegbaren Teil verbunden ist, **dadurch gekennzeichnet**, daß ein in einer Kugelpfanne des Kugelgelenkes gelagerter Kugelkopf (12) oder die Kugelpfanne mit elastisch nachgiebigen Mitteln versehen ist.

2. Antriebsvorrichtung nach Anspruch 1, **dadurch gekennzeichnet**, daß der Kugelkopf (12) wenigstens eine umlaufende Nut aufweist, die einen Gummiring (13) aufnimmt.

3. Antriebsvorrichtung nach Anspruch 1, **dadurch gekennzeichnet**, daß der Kugelkopf (12) zwei parallele, aus der Mitte heraus angeordnete Nuten (22) aufweist, in denen jeweils ein Gummiring (13) eingelegt ist.

4. Antriebsvorrichtung nach Anspruch 1, **dadurch gekennzeichnet**, daß der Kugelkopf (12) zumindest teilweise mit einer elastisch nachgiebigen Schicht überzogen ist.

5. Antriebsvorrichtung nach Anspruch 1, **dadurch gekennzeichnet**, daß die Kugelpfanne auf ihrer Innenseite zumindest teilweise mit einer elastisch nachgiebigen Schicht überzogen ist.

6. Antriebsvorrichtung nach einem der vorhergehenden Ansprüche, **dadurch gekennzeichnet**, daß das Kugelgelenk zwischen dem Verbindungselement (Verbindungsstange 11) und dem bewegbaren Teil angeordnet ist.

7. Antriebsvorrichtung nach einem der vorhergehenden Ansprüche, **dadurch gekennzeichnet**, daß das Kugelelement zwischen dem Verbindungselement (Verbindungsstange 11) und dem Stellantrieb angeordnet ist.

8. Antriebsvorrichtung nach Anspruch 6 und 7, **gekennzeichnet durch** die Kombination der Merkmale der Ansprüche 6 und 7.

9. Antriebsvorrichtung nach einem der vorhergehenden Ansprüche, **dadurch gekennzeichnet**, daß die Antriebsvorrichtung als Linearantrieb ausgebildet ist.

10. Antriebsvorrichtung nach einem der vorhergehenden Ansprüche mit einem von dem Stellantrieb angetriebenen Gewindestück, daß mit einem zugehörigen Gewindestück kämmt, wobei das zugehörige Gewindestück das Teil bewegt, **dadurch gekennzeichnet**, daß einzelne Gewindegänge zumindest eines Gewindestückes (14) derart ausgebildet sind, daß sie in den jeweils zugehörigen Gewindegängen des anderen Gewindestückes unter Krafteinwirkung anliegen.

11. Antriebsvorrichtung nach Anspruch 10, **dadurch gekennzeichnet**, daß einzelne Gewindegänge gegenüber den übrigen Gewindegängen dicker ausgebildet sind.

12. Antriebsvorrichtung nach Anspruch 10 oder 11, **dadurch gekennzeichnet**, daß einzelne Gewindegänge gegenüber den übrigen Gewindegängen in Umfangsrichtung gebogen ausgebildet sind.

13. Antriebsvorrichtung nach einem der Ansprüche 10 bis 12, **dadurch gekennzeichnet**, daß einzelne Gewindegänge zumindest teilweise in Umfangsrichtung einen Schlitz aufweisen.

14. Antriebsvorrichtung nach einem der vorhergehenden Ansprüche 10 bis 13, **dadurch gekennzeichnet**, daß einzelne Gewindegänge aus einer von der durch das zugehörige Gewindestück vorgegebenen Lage abweichenden Lage angeordnet sind.
